# EUROPÄISCHE PATENTANMELDUNG

(11) **EP 1 715 464 A1**
(43) Veröffentlichungstag der Anmeldung: **25.10.2006**
(21) Anmeldenummer: 06008003.3
(22) Anmeldetag: 18.04.2006
(51) Int. Cl.: G07G 5/00, G07F 17/42, G07G 1/00

(54) **Vorrichtungen und Verfahren zur Erzeugung benutzerbezogener Dokumente**

(30) Priorität: 18.04.2005 DE 202005006187 U; 06.11.2005 DE 102005052700
(71) Anmelder: Sachse, Günter, 85652 Pliening (DE); Niederhageböck, Guilherme, 80321 Grünwald (DE)
(72) Erfinder: Sachse, Günter, 85652 Pliening (DE); Niederhageböck, Guilherme, 80321 Grünwald (DE)
(74) Vertreter: von Pichler, Cletus

(57) **Zusammenfassung**

System und Verfahren zum Erzeugen eines personenbezogenen Dokuments, bei denen von einer ersten Vorrichtung, die einem ersten Benutzer zugeordnet ist und tragbar ist, dem ersten Benutzer zugeordnete Daten zu einer zweiten Vorrichtung übertragen werden, die einem zweiten Benutzer zugeordnet ist und zur Erzeugung des personenbezogenen Dokuments vorgesehen ist, dem zweiten Benutzer zugeordnete Daten bereitgestellt werden, und ein personenbezogenes Dokument mit Angaben erzeugt wird, die die übertragenen, dem ersten Benutzer zugeordneten Daten und die dem zweiten Benutzer zugeordneten Daten wiedergeben. Ferner ist es vorgesehen, - als das personenbezogene Dokument- ein Papierdokument oder ein elektronisches Dokument mit Angaben erzeugt, die die übertragenen, dem ersten Benutzer zugeordneten Daten und die dem zweiten Benutzer zugeordneten Daten wiedergeben.

## Beschreibung

### Gebiet der Erfindung

Die vorliegende Erfindung betrifft im Allgemeinen die Erzeugung von Dokumenten und insbesondere Vorrichtungen und Verfahren, mit den Dokumente erzeugt werden können, die personenbezogene Daten oder entsprechende Angaben aufweisen.

### Hintergrund der Erfindung

Bei der Verarbeitung von Daten ist es üblich, personen- und/oder unternehmensbezogene Daten zu berücksichtigen. Dies kann insbesondere dann ein Problem darstellen, wenn solche Daten nicht vorliegen (z.B. in einer Datenbank). In solchen Fällen ist es im Allgemeinen erforderlich, personen- und/oder unternehmensbezogene Daten manuell einzugeben oder einen personen- und/oder unternehmensbezogene Daten umfassenden Datensatz beispielsweise zwischen Computern auszutauschen.

Dieses Problem ist insbesondere dann beachtlich, wenn personen- und/oder unternehmensbezogene Daten unterschiedlicher Personen nur einmalig und/oder eine Mehrzahl neuer personen- und/oder unternehmensbezogener Daten berücksichtigt werden sollen.

Ein Beispiel hierfür ist die Erstellung einer Rechnung oder Kassenbons beispielsweise in einem Restaurant oder einem Geschäft, wenn die Rechnung gemäß umsatzsteuerlichen Regelungen - neben geforderten Angaben über den die Rechnung ausstellenden Unternehmer (auch als leistender Unternehmer bezeichnet) - Angaben enthalten soll, die den Kunden (Leistungsempfänger) betreffen. Den leistenden Unternehmer betreffende Angaben umfassen beispielsweise dessen Namen und Adresse, die von diesem erbrachte Lieferung oder sonstige Leistungen, dessen Steuernummer, das Ausstellungsdatum, eine fortlaufende Nummer, handelsübliche Bezeichnung der gelieferten Gegenstände oder Leistung, den Zeitpunkt der Lieferung oder sonstigen Leistung, den anzuwendenden Steuersatz sowie den auf das Entgelt entfallende Steuerbetrag. Den Kunden betreffende Angaben nachträglich, beispielsweise handschriftlich durch den Kunden, zu ergänzen scheidet aus gesetzlichen Gründen oftmals aus. Damit die Rechnung die geforderten Angaben vollständig enthält, kann es notwendig sein, dass jedes Mal vor der Rechnungserstellung die Kundenangaben in ein zur Rechnungserstellung verwendetes Gerät manuell eingegeben werden. Diese Vorgehensweise ist zeit- und personalaufwändig. Die Kundenangaben können auch von dem leistenden Unternehmer von einer Datenbank abgerufen werden. Dies erfordert, dass die Kundenangaben zuvor in die Datenbank eingegeben worden sind. Auch dies ist zeit- und personalaufwändig. Ferner bestehen in der Speicherung von personenbezogenen Daten oftmals datenschutzrechtliche Bedenken oder ist vom Kunden nicht erwünscht.

Ein weiteres Beispiel ist die Integration von personenbezogenen Daten in ein Computersystem und/oder -programm, wenn die Person, deren Daten verwendet werden sollen, nicht ebenfalls über ein computerbasiertes Gerät oder System verfügt, das mit dem Computersystem und/oder -programm Daten austauschen kann. Auch hier ist es im Allgemeinen erforderlich, personenbezogene Daten manuell einzugeben und/oder von einer Datenbank abzurufen, wodurch auch hier die obigen Probleme auftreten können.

### Aufgabe der Erfindung

Aufgabe der vorliegenden Erfindung ist es, Mittel bereitzustellen, die es einem Benutzer auf einfache und sichere Weise ermöglichen, seine abhängig vom jeweiligen Anwendungsfall benötigten personen- und/oder unternehmensbezogenen Daten, ohne diese im einzelnen und/oder manuell eingeben zu müssen, einer technischen Vorrichtung so bereitzustellen, dass ein Dokument erzeugt werden kann, das die bereitgestellten Daten des Benutzers oder Angaben über diesen aufweist.

### Kurzbeschreibung der Erfindung

Zur Lösung der obigen Aufgabe stellt die vorliegende Erfindung Systeme, Vorrichtungen und Verfahren gemäß den unabhängigen Ansprüchen bereit.

Insbesondere stellt die vorliegende Erfindung ein System zur Erzeugung eines personenbezogenen Dokuments bereit, das eine erste Vorrichtung und eine zweite Vorrichtung umfasst.

Die erste Vorrichtung ist einem ersten Benutzer zugeordnet, tragbar und weist eine erste Speichereinrichtung zur Speicherung von dem ersten Benutzer zugeordneten Daten und eine erste Schnittstelle zur Bereitstellung von dem ersten Benutzer zugeordneten Daten der ersten Speichereinrichtung auf.

Die zweite Vorrichtung ist einem zweiten Benutzer zugeordnet und weist eine zweite Schnittstelle zum Empfang von dem ersten Benutzer zugeordneten Daten über die erste Schnittstelle und eine Einrichtung zur Bereitstellung von dem zweiten Benutzer zugeordneten Daten auf.

Unter Benutzern werden im Folgenden einzelne natürliche Personen, einzelne juristische Personen (z.B. Unternehmen, Einzelunternehmer, Gesellschaften, etc.), mehrere natürliche Personen und juristische Personen, die jeweils einer Gruppe zugeordnet sind, und Untergruppen von juristischen Personen (z.B. Abteilungen, Kostenstellen, Tochterunternehmen, etc.) verstanden.

Unter dem ersten Benutzer wird ferner insbesondere eine Entität verstanden, die im steuerrechtlichen Sinn als Leistungsempfänger betrachtet werden kann.

Unter dem zweiten Benutzer wird ferner insbesondere eine Entität verstanden, die im steuerrechtlichen Sinn als leistender Unternehmer betrachtet werden kann.

Gemäß einer Ausführungsform weist die zweite Vorrichtung eine Einrichtung auf, die zur Erzeugung eines Papierdokuments mit Angaben vorgesehen ist, die die empfangenen, dem ersten Benutzer zugeordneten Daten und die dem zweiten Benutzer zugeordneten Daten wiedergeben. Insbesondere ist es bei dieser Ausführungsform vorgesehen, die Daten des ersten Benutzers in der zweiten Vorrichtung und/oder in Zuordnung zu der zweiten Vorrichtung nicht zu speichern.

Gemäß einer weiteren Ausführungsform weist die zweite Vorrichtung eine Einrichtung auf, die zur Erzeugung eines elektronischen Dokuments mit Angaben vorgesehen ist, die die empfangenen, dem ersten Benutzer zugeordneten Daten und die dem zweiten Benutzer zugeordneten Daten wiedergeben.

Vorzugsweise weist die erste Speichereinrichtung Daten auf, die steuerrechtlich relevante Angaben und insbesondere umsatzsteuerrechtlich Angaben des ersten Benutzers wiedergeben. Zum Beispiel ist es vorgesehen, dass die erste Speichereinrichtung Daten aufweist, die Angaben des ersten Benutzers wiedergeben, die gemäß § 14 Abs. 4 i.V.m. § 14 Abs. 2 des deutschen Umsatzsteuergesetzes auf bestimmten Rechungen auszuweisen sind. Beispiele hierfür umfassen den vollständigen Namen, die Anschrift und die Umsatzsteuernummer des ersten Benutzers.

Ferner ist es bevorzugt, dass die erste Speichereinrichtung Daten aufweist, die personenbezogene Angaben des ersten Benutzers wiedergeben. Zum Beispiel ist es vorgesehen, dass die erste Speichereinrichtung Daten aufweist, die Angaben des ersten Benutzers wiedergeben, die mit denen einer herkömmlichen Visitenkarte des ersten Benutzers vergleichbar sind oder solchen entsprechen. Beispiele hierfür umfassen den Namen, die Anschrift, Telefonnummer(n), E-Mail-Adresse(n), Homepage-Adresse(n), Arbeits- und/oder Öffnungszeiten sowie ein Photo des ersten Benutzers persönliche Angaben, wie Alter, Geschlecht, Größe, Familienstand, etc.

Bei einer weiteren Ausführungsform umfasst die erste Speichereinrichtung wenigstens zwei getrennte Speicher.

Dabei ist es ferner vorgesehen, dass ein erster Speicher der ersten Speichereinrichtung zur Speicherung eines ersten Datentyps vorgesehen ist und ein zweiter Speicher der ersten Speichereinrichtung zur Speicherung eines zweiten Datentyps vorgesehen ist.

Beispielsweise kann die erste Speichereinrichtung einen von Kredit- und Scheckkarten bekannten Magnetstreifen für umsatzsteuerrechtlich relevante Angaben des ersten Benutzers und einen von Smart-Karten und Geldkarten bekannten Speicherchip für personenbezogene Angaben des ersten Benutzers aufweisen.

Vorzugsweise sind die erste Speichereinrichtung und die erste Schnittstelle wenigstens teilweise baueinheitlich integriert. Diese Ausführungsform wird zum Beispiel erreicht, wenn die erste Speichereinrichtung einen von Kredit- und Scheckkarten bekannten Magnetstreifen aufweist, der zur Datenspeicherung und zum Zugriff auf die Daten dient. Dies gilt auch für den Fall, bei dem die erste Speichereinrichtung einen von Smart-Karten und Geldkarten bekannten Speicherchip umfasst.

Die erste Vorrichtung kann eine erste Steuereinrichtung umfassen, die dazu ausgelegt ist, eine Übertragung von dem ersten Benutzer zugeordneten Daten von der ersten Speichereinrichtung über die erste Schnittstelle zu steuern. Beispiele für die erste Steuereinrichtung umfassen Computerchips, Mikrokontroller, Schaltungsanordnungen mit festverdrahteter Steuerung, von Chip-Karten bekannte Chips mit integrierten und/oder integrierbaren Steuerungsfunktionen.

Ferner ist es vorgesehen, dass die erste Steuereinrichtung programmierbar ist, insbesondere hinsichtlich der Art und Weise, wie Daten der ersten Speichereinrichtung bereitgestellt werden. Beispielsweise kann die erste Steuereinrichtung so programmiert sein, dass in Antwort auf eine Anfrage seitens der zweiten Vorrichtung bestimmte und/oder angeforderte Daten unter Steuerung der ersten Steuereinrichtung über die erste Schnittstelle ausgeben werden.

Vorzugsweise sind die erste Steuereinrichtung und die erste Speichereinrichtung wenigstens teilweise baueinheitlich integriert. Dies wird beispielsweise durch einen Chip erreicht, der zur Datenspeicherung und zur Steuerung dient.

Gemäß einer Ausführungsform umfasst die Einrichtung zur Bereitstellung der dem zweiten Benutzer zugeordneten Daten wenigstens eine der folgenden Komponenten:
Einen Speicher, der zum Beispiel vorab gespeicherte Daten des zweiten Benutzers und/oder während des Betriebs gespeicherte und/oder zu speichernde Daten des zweiten Benutzers enthält;
eine Dateneingabeschnittstelle, wie z.B. eine parallele und/oder serielle Datenschnittstelle, eine USB-Schnittstelle, eine transponderbasierte Schnittstelle, eine Infrarot-Schnittstelle, eine Schnittstelle zur drahtlosen Datenübertragung, insbesondere in Form einer Bluetooth-Schnittstelle, und ein Scanner zum Einlesen von Barkodes, Strichkodes und dergleichen, über die, die Daten des zweiten Benutzers zu der zweiten Vorrichtung übertragen werden können;
einen Datenbus, über den die Daten des zweiten Benutzers von einem anderen System, einem Computer, einer Datenbank und dergleichen zu der zweiten Vorrichtung übertragen werden können; und/oder
ein Dateneingabemedium, wie z.B. eine Tastatur, eine Maus oder dergleichen, ein Scanner zum Einlesen von papiergebundenen Informationen, ein Mikrophon zur Spracheingabe.

Bei einer Ausführungsform umfasst die Einrichtung der zweiten Vorrichtung zur Erzeugung des Papierdokuments einen Drucker, Plotter oder eine andere Einheit, mit der ein bedruckbares Medium (z.B. Papier) mit den genannten Angaben versehen werden kann.

Bei einer weiteren Ausführungsform umfasst die Einrichtung der zweiten Vorrichtung zur Erzeugung des elektronischen Dokuments eine oder mehrere hardware- und/oder softwarebasierte Komponenten, die - vergleichbar zu solchen Komponenten eines Computers - elektronische Dokumente (z.B. in Form einer Datei, eines Datensatzes, eines elektronischen Adresseintrags etc.) erzeugen können.

Die zweite Vorrichtung kann eine zweite Speichereinrichtung umfassen, die zur Speicherung der empfangenen, dem ersten Benutzer zugeordneten Daten vorgesehen ist. Bei dieser Ausführungsform werden, in Ergänzung, die dem ersten Benutzer zugeordneten Daten von der zweiten Vorrichtung gespeichert. Dies kann beispielsweise erfolgen, wenn der erste Benutzer seine, die erste Vorrichtung erstmals in Verbindung mit der zweiten Vorrichtung verwendet.

Ferner kann die zweite Vorrichtung eine zweite Steuereinrichtung umfassen, die ausgelegt ist, über die zweite Schnittstelle Daten der ersten Speichereinrichtung abzurufen. Beispiele für die erste Steuereinrichtung umfassen Computerchips, Mikrokontroller, Schaltungsanordnungen mit festverdrahteter Steuerung, von Chip-Karten bekannte Chips mit integrierten und/oder integrierbaren Steuerungsfunktionen.

Ferner ist es vorgesehen, dass die zweite Steuereinrichtung programmierbar ist, insbesondere hinsichtlich der Art und Weise, wie auf Daten der ersten Speichereinrichtung zugegriffen werden soll. Beispielsweise kann die zweite Steuereinrichtung so programmiert sein, dass die erste Vorrichtung erkannt wird und in Antwort eine Anfrage an die erste Vorrichtung übertragen wird, bestimmte und/oder angeforderte Daten der ersten Speichereinrichtung zurück zu übertragen und/oder unter Steuerung der zweiten Steuereinrichtung auszulesen.

Bei einer weiteren Ausführungsform umfasst das System einen Datenspeicher. Dabei kann die zweite Vorrichtung ausgelegt sein, die empfangenen, dem ersten Benutzer zugeordneten Daten in dem Datenspeicher (z.B. wenn der Datenspeicher von der zweiten Vorrichtung umfasst ist oder der zweiten Vorrichtung zugeordnet ist) speichern und/oder zur Speicherung in dem Datenspeicher (z.B. wenn der Datenspeicher durch eine zentrale Einrichtung, Datenbank etc. bereitgestellt ist) zu diesem übertragen.

Ergänzend oder alternativ kann die zweite Vorrichtung ausgelegt sein, Daten, die auf den empfangenen, dem ersten Benutzer zugeordneten Daten basieren, in dem Datenspeicher (z.B. wenn der Datenspeicher von der zweiten Vorrichtung umfasst ist oder der zweiten Vorrichtung zugeordnet ist) zu speichern und/oder zur Speicherung in dem Datenspeicher (z.B. wenn der Datenspeicher durch eine zentrale Einrichtung, Datenbank etc. bereitgestellt ist) zu diesem übertragen. Beispiele für solche Daten umfassen Daten, die nur teilweise den empfangenen, dem ersten Benutzer zugeordneten Daten entsprechen und/oder sich durch eine oder mehrere logische Verknüpfungen von wenigstens Teilen derselben ergeben und/oder durch weitere dem ersten Benutzer zuzuordnende Daten ergänzt sind.

Um der zweiten Vorrichtung weitere Kommunikationsmöglichkeiten zu eröffnen, kann eine Schnittstelleneinrichtung vorgesehen sein, die zur Datenübertragung von und zu einer externern Vorrichtung oder System dient.

Vorzugsweise ist die erste Vorrichtung als Magnetspeicherkarte, Chip-Karte, transponderbasierte Vorrichtung, Smart-Karte, Kreditkarte oder Scheckkarte ausgeführt. Bei einer weiteren Ausführungsform kann die erste Vorrichtung als tragbares Gerät, beispielsweise in Form eines Mobiltelefons, ausgeführt oder in ein solches integriert sein.

Ferner ist es bevorzugt, dass die zweite Schnittstelle zur Datenübertragung zu einer Magnetkartenleseeinrichtung und/oder einer Chip-Kartenleseeinrichtung und/oder einer transponderbasierten Empfangseinrichtung und/oder zur funkbasierten Datenübertragung ausgelegt ist, wobei die zweite Schnittstelle entsprechend ausgeführt sein kann, zum Beispiel als Magnetkartenleseeinrichtung und/oder Chip-Kartenleseeinrichtung und/oder transponderbasierte Empfangseinrichtung und/oder Einrichtung zur funkbasierten Datenübertragung.

Die erste Schnittstelle so auszulegen, dass sie zwei und mehr Schnittstellentypen, Schnittstellenprotokolle, Datenübertragungsarten etc. unterstützt, hat den Vorteil, dass die erste Vorrichtung mit unterschiedlichen Typen von zweiten Vorrichtungen bzw. zweiten Schnittstellen verwendet werden kann. So erlaubt es diese Ausführungsform beispielsweise, die erste Vorrichtung mit einer zweiten Vorrichtung, deren zweite Schnittstelle ein Magnetkartenlesegerät oder -einrichtung umfasst, und mit einer zweiten Vorrichtung zu verwenden, deren zweite Schnittstelle zur transponderbasierten Datenübertragung (z.B. RIF-Technologie) ausgelegt ist.

Insbesondere ist es bevorzugt, dass die zweite Vorrichtung eine Registrierkasse, ein Kassensystem, eine tragbare Vorrichtung zu Erstellung von Rechungen, Quittungen und dergleichen (z.B. tragbares Abrechnungsgerät, "Satellit" eines Kassensystems) oder ein computerbasierte Vorrichtung umfasst, die zur Ausgabe von Papierdokumenten eingerichtet ist.

Bei einer weiteren Ausführungsform sind die erste Vorrichtung eine tragbare Speicherkarte, die einem Empfänger einer Leistung als dem ersten Benutzer zugeordnet ist, der erste Speicher ein Speicher zur Speicherung von Daten ist, die Angaben über den Leistungsempfänger für eine Rechnung gemäß Steuergesetze (z.B. Umsatz-, Einkommens-, Gewerbe- und/oder Körperschaftsteuer) betreffenden Regelungen wiedergeben, ist die zweite Vorrichtung ein Kassensystem ist, das einem leistenden Unternehmer als dem zweiten Benutzer zugeordnet ist, die Einrichtung zur Bereitstellung von dem zweiten Benutzer zugeordneten Daten eine Einrichtung, um Daten bereitzustellen, die Angaben über den leistenden Unternehmer für eine Rechnung gemäß Steuergesetze betreffenden Regelungen wiedergeben, und die zweite Schnittstelle eine mit der tragbaren Speicherkarte verbindbare Schnittstelle zum Zugriff auf die Daten der Speicherkarte, wobei die Ausgabeeinrichtung ausgelegt ist, eine Rechnung auszudrucken, die mit den Angaben über den Leistungsempfänger und den Angaben über den leistenden Unternehmer versehen ist.

Vorzugsweise umfasst die zweite Vorrichtung eine computerbasierte Vorrichtung, die ausgelegt ist, die empfangenen, dem ersten Benutzer zugeordneten Daten und die bereitgestellten, dem zweiten Benutzer zugeordneten Daten in einen gemeinsamen Datensatz integriert zu speichern.

Bei einer weiteren Ausführungsform kann die erste Vorrichtung eine dem ersten Benutzer zugeordnete, tragbare Speicherkarte zur Speicherung von Daten sein, die Angaben wiedergeben, die mit Angaben einer Visitenkarte des Benutzers vergleichbar sind, und die zweite Vorrichtung ausgelegt sein, über die zweite Schnittstelle auf die Daten der tragbaren Speicherkarte zuzugreifen und die Daten der tragbaren Speicherkarte in der zweiten Vorrichtung zu speichern.

Des weiteren stellt die vorliegende Erfindung eine tragbare Speichervorrichtung, ein Kassensystem und eine computerbasierte Vorrichtung jeweils zur Verwendung mit dem erfindungsgemäßen System bereit.

Ferner stellt die vorliegende Erfindung ein Verfahren zum Erzeugen eines personenbezogenen Dokuments bereit, bei dem von einer ersten Vorrichtung, die einem ersten Benutzer zugeordnet ist und tragbar ist, dem ersten Benutzer zugeordnete Daten zu einer zweiten Vorrichtung übertragen werden, die einem zweiten Benutzer zugeordnet ist und zur Erzeugung des personenbezogenen Dokuments vorgesehen ist, dem zweiten Benutzer zugeordnete Daten bereitgestellt werden, und ein personenbezogenes Dokument mit Angaben erzeugt wird, die die übertragenen, dem ersten Benutzer zugeordneten Daten und die dem zweiten Benutzer zugeordneten Daten wiedergeben.

Bei einer Ausführungsform wird - als das personenbezogene Dokument- ein Papierdokument mit Angaben erzeugt, die die übertragenen, dem ersten Benutzer zugeordneten Daten und die dem zweiten Benutzer zugeordneten Daten wiedergeben.

Bei einer weiteren Ausführungsform wird - als das personenbezogene Dokument- ein elektronisches Dokument mit Angaben erzeugt, die die übertragenen, dem ersten Benutzer zugeordneten Daten und die dem zweiten Benutzer zugeordneten Daten wiedergeben, als das personenbezogene Dokument.

Die vorliegende Erfindung stellt auch ein Computerprogrammprodukt bereit, das Programmkode zur Durchführung des erfindungsgemäßen Verfahren aufweist.

### Kurzbeschreibung der Zeichnungen

In der folgenden Beschreibung bevorzugter Ausführungsformen wird auf die beigefügten Zeichnungen Bezug genommen, die zeigen:
- Fig. 1a und 1b: schematische Darstellungen einer bevorzugten Ausführungsform der ersten Vorrichtung gemäß der vorliegenden Erfindung,
- Fig. 2: eine schematische Darstellung einer bevorzugten Ausführungsform der zweiten Vorrichtung gemäß der vorliegenden Erfindung,
- Fig. 3: eine schematische Darstellung einer bevorzugten Ausführungsform des erfindungsgemäßen Verfahrens, und
- Fig. 4: eine schematische Darstellung einer weiteren bevorzugten Ausführungsform des erfindungsgemäßen Verfahrens.

### Beschreibung bevorzugter Ausführungsform

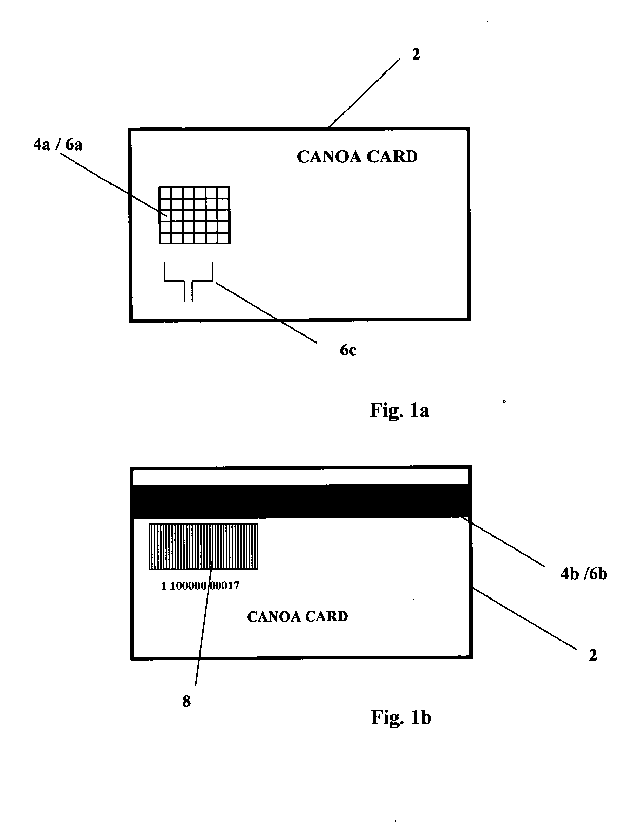

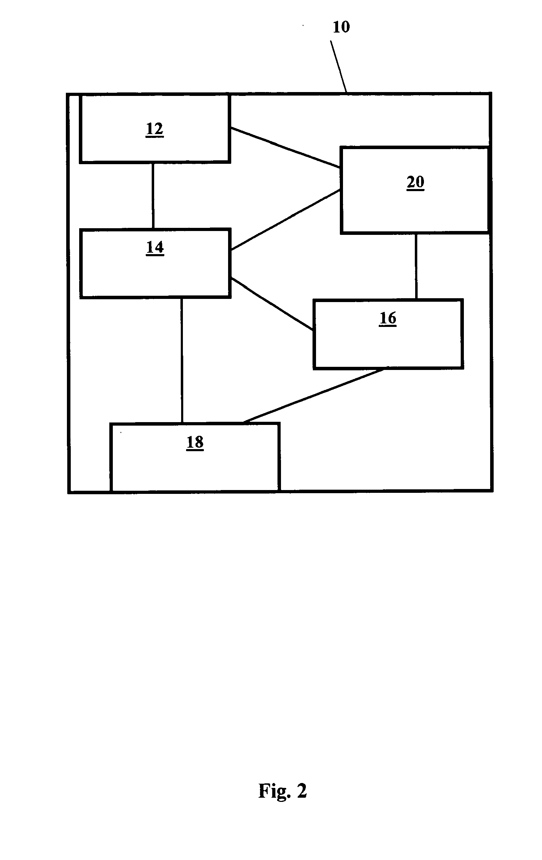

Fig. 1a und 1b und Fig. 2 veranschaulichen schematisch Ausführungsformen einer ersten Vorrichtung 2 und einer zweiten Vorrichtung 10 eines Systems zur Erzeugung von personenbezogenen Dokumenten. Hinsichtlich der im Folgenden verwendeten Begriffe und Bezeichnungen sowie deren hier zugrunde gelegtes Verständnis wird auf die obigen Ausführungen, die hier ebenfalls gelten, verwiesen.

Fig. 1a und 1b zeigen die Vorderseite bzw. Rückseite einer ersten, einem ersten Benutzer zugeordnete Vorrichtung im Form einer tragbaren Speichervorrichtung oder Speicherkarte 2. Die Speichervorrichtung 2 weist eine oder mehrere Speichereinrichtungen zur Speicherung von dem ersten Benutzer zugeordneten Daten und eine oder mehrere Schnittstellen auf, über die Daten der Speichereinrichtung bereitgestellt (z.B. übertragen, abgerufen) werden können. Im Folgenden werden für die Speichereinrichtung(en) zusammenfassend das Bezugszeichen 4 und für die Schnittstelle(en) zusammenfassend das Bezugszeichen 6 verwendet.

Die Speichervorrichtung 2 kann als Speichereinrichtung einen Speicherbaustein oder Speicherchip 4a (Fig. 1a) und/oder einen Magnetstreifen 4b zur magnetischen Datenspeicherung (siehe Fig. 1b) aufweisen.

Im Fall des Speicherchips 4a als Speichereinrichtung kann der Speicherchip 4a selbst als Schnittstelleneinrichtung dienen oder die Schnittstelleneinrichtung baueinheitlich integriert aufweisen. Dies ist Fig. 1a durch das Bezugszeichen 6a angeben. Die gilt insbesondere, wenn ein beispielsweise von Geldkarten und Smart-Karten bekannter Chip verwendet wird.

Im Fall des Magnetstreifens 4b als Speichereinrichtung dient der Magnetstreifen 4b auch als Schnittstelleneinrichtung. Dies ist Fig. 1b durch das Bezugszeichen 6b angeben.

Ferner ist es vorgesehen, dass die erste Vorrichtung 2 (auch) einen Speicher (nicht gezeigt) umfassen kann, der in die Erste Vorrichtung 2 so integriert ist, dass ein Zugriff auf dessen Daten über eine separat ausgeführte Schnittstelle erfolgt. Ein solcher Speicher kann zum Beispiel ein in die erste Vorrichtung 2 integrierter Baustein (z.B. PROM, EPROM, EEPROM, Flash-Speicher, etc.), der nur zur Datenspeicherung dient. Dies kann auch bei dem Speicherchip 4a vorliegen, wenn dieser keine Schnittstellenfunktion bereitstellt.

In solchen Fällen ist eine Schnittstelleneinrichtung vorgesehen, die eine drahtlose, funkbasierte oder transponderbasierte Datenübertragung von der Speichereinrichtung 4. In Fig. 1a ist dies durch die mit dem Bezugszeichen 6c bezeichnete Komponente angegeben, die zum Beispiel eine, beispielsweise eine Antenne, Sender etc. umfassende Schnittstelle zur Funkdatenübertragung, Bluetooth-Datenübertragung, Infrarot- Datenübertragung und/oder transponderbasierten Datenübertragung sein kann. Die Schnittstelle 6c kann mehrere Datenübertragungsarten unterstützen.

Die Schnittstelle(n) 6 kann (können) anwendungsabhängig beispielsweise in Abhängigkeit davon ausgeführt sein, welche Schnittstelle(n) die erste Vorrichtung 2 aufweist. Näheres hierzu findet sich bei der Beschreibung von Fig. 2.

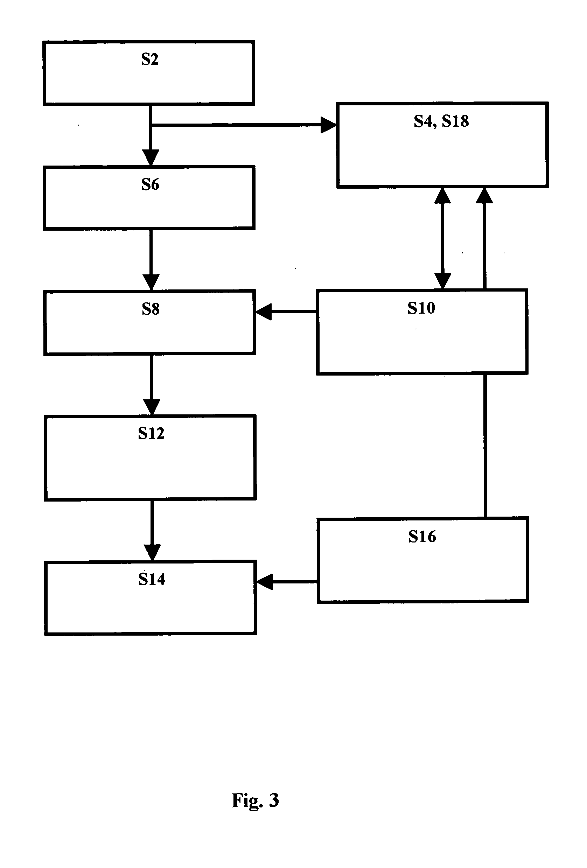

Ferner kann die erste Vorrichtung 2 einen Barkode oder Strichkode 8 aufweisen, der - wie unter Bezugnahme auf Fig. 3 beschrieben - zur Speicherung von einer dem ersten Benutzer zugeordneten Kennung verwendet werden kann.

Es ist auch möglich, dass die erste Vorrichtung 2 eine Steuereinrichtung (nicht gezeigt) aufweist, die insbesondere dazu dient, Daten der Speichereinrichtung 4 gesteuert bereitzustellen. Die Steuereinrichtung bzw. deren Funktionen können auch baueinheitlich integriert von dem Chip 4a/6a bereitgestellt sein.

Fig. 2 veranschaulicht eine zweite Vorrichtung 10, die einem zweiten Benutzer zugeordnet ist. Die zweite Vorrichtung 10 weist, wie in Fig. 2 gezeigt eine Schnittstelle 12 oder mehrere Schnittstellen (nicht gezeigt) auf. Die Schnittstelle(n) 12 dient zu Datenübertragung von Daten der Speichereinrichtung 4 der ersten Vorrichtung 2. Die Schnittstelle(n) 12 kann (können) anwendungsabhängig beispielsweise in Abhängigkeit davon ausgeführt sein, welche Schnittstelle(n) 6 die erste Vorrichtung 2 aufweist.

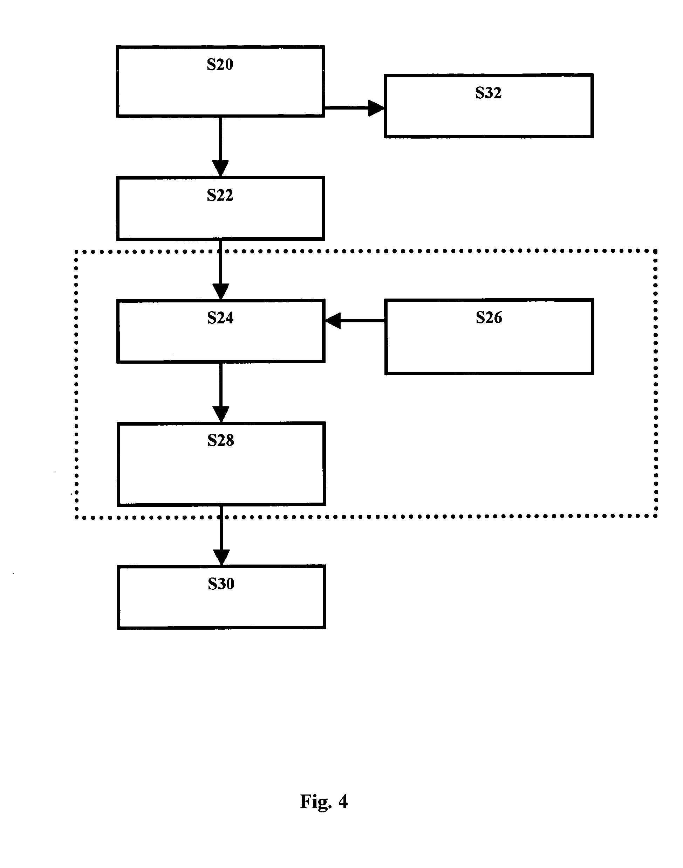

Die zweite Vorrichtung 10 umfasst eine Steuereinrichtung 14. Die Steuereinrichtung 14 dient dazu, Daten der ersten Vorrichtung 2 anzufordern, abzurufen oder deren Übertragung zu steuern. Insbesondere kann die Steuereinrichtung 14 die Schnittstelle(n) 12 entsprechend steuern. Die Steuereinrichtung 14 steuert ferner unter Bezugnahme auf Fig. 4 beschriebene Vorgänge und Betriebszustände im Zusammenhang mit von der ersten Vorrichtung 2 erhaltenen Daten.

Unter Steuerung der Steuereinrichtung 14 werden Daten, die dem Benutzer der zweiten Vorrichtung 10 zugeordnet sind, bereitgestellt. Solche Daten können in einem internen Speicher 16 gespeichert sein und von dort gesteuert ausgelesen werden. Solche Daten können ergänzend oder alternativ über eine Schnittstelleneinrichtung 18 bereitgestellt werden. Die Schnittstelleneinrichtung 18 kann beispielsweise zur manuellen Dateneingabe (z.B. mittels Tastatur, Maus, etc.) und/oder zur drahtgebundenen und/oder drahtlosen Dateneingabe (z.B. mittels Kabel, Bus, Funksignalen, Scanner, etc.) ausgeführt sein.

Die von der ersten Vorrichtung 2 bereitgestellten Daten des ersten Benutzers und die Daten des zweiten Benutzers werden unter Steuerung der Steuereinrichtung 14 verwendet, um mittels einer Einrichtung 20 ein oder mehrere Dokumente zu erzeugen, die diese Daten oder diese Daten repräsentierende Angaben aufweist.

Die Einrichtung 20 kann beispielsweise eine baueinheitlich integrierte Druckeinrichtung, eine als separate Komponente ausgeführte Druckeinheit oder Drucker oder eine andere Vorrichtung sein, mit der Papierdokumente erzeugt werden können.

Fig. 3 veranschaulicht eine Ausführungsform eines Verfahrens, um einem ersten Benutzer zugeordnete Daten in einer ersten Vorrichtung gemäß der vorliegenden Erfindung zu speichern.

In Schritt S2 werden Daten des ersten Benutzers, im Folgenden auch als Benutzerdaten bezeichnet, von diesem beispielsweise per Post, E-Mail, Fax, manuelle Eingabe, Spracheingabe oder unter Verwendung eines Mobiltelefons bereitgestellt.

In einem optionalen Schritt S4 werden die bereitgestellten Benutzerdaten in einer Datenbank gespeichert.

In Schritt S6 können die Benutzerdaten formatiert werden, wenn die Benutzerdaten nicht bereits in einem geeigneten Format vorliegen.

In Schritt S8 ist - wenn erwünscht - vorgesehen, die Benutzerdaten zu Verschlüsseln. Der hierfür erforderliche Schlüssel oder Algorithmus kann in Schritt S 10 bereitgestellt werden.

In Schritt S 12 werden die (formatierten und/oder verschlüsselten) Benutzerdaten so verarbeitet, dass sie ein zur Speicherung in der Speichereinrichtung der erfindungsgemäßen ersten Vorrichtung geeignetes Format aufweisen. Beispielsweise können die Benutzerdaten hier ein für Magnetspeicherkarten verwendetes Format erhalten.

In Schritt S 14 werden die Benutzerdaten in der Speichereinrichtung der ersten Vorrichtung gespeichert.

In einem optionalen Schritt S 16 kann die erste Vorrichtung mit einer Kennung für den ersten Benutzer versehen werden, beispielsweise in Form einer mittels Barkode oder Strichkode gespeicherten Benutzer-ID. Die Benutzerkennung kann in Schritt S18 in der obigen Datenbank (siehe Schritt S4) oder einer anderen Datenbank gespeichert werden.

Fig. 4 veranschaulicht eine Ausführungsform eines Verfahrens, um auf der Grundlage von einem ersten Benutzer zugeordneten Daten ein Dokument zu erzeugen.

In Schritt S20 werden von der ersten Vorrichtung Daten des ersten Benutzers, im Folgenden auch als Benutzerdaten bezeichnet, der zweiten Vorrichtung bereitgestellt (z.B. übertragen oder ausgelesen).

In Schritt S22 werden, falls erforderlich, die erhaltenen Benutzerdaten, verarbeitet oder formatiert, um beispielsweise ein für die erste Vorrichtung spezifisches in ein für die zweite Vorrichtung geeignetes Format umzuwandeln.

Wenn verschlüsselte Benutzerdaten vorliegen, werden die Benutzerdaten in Schritt S24 entschlüsselt. Hierfür kann in Schritt S26 ein entsprechender Schlüssel erzeugt und/oder abgerufen werden und/oder ein entsprechender Algorithmus ausgeführt werden.

In Schritt S28 werden die (formatierten und/oder entschlüsselten) Benutzerdaten, wenn erwünscht oder erforderlich, (erneut) verarbeitet oder formatiert, um ein für die jeweilig vorgesehen zur erzeugende Dokumentenart geeignetes, anwendungsabhängiges Datenformat zu erhalten.

In Schritt S30 werden die nun vorliegenden Benutzerdaten oder diese repräsentierende Daten oder Angaben zusammen mit in einem nicht dargestellten Schritt bereitgestellten Daten, die der zweiten Vorrichtung zugeordnet sind, verwendet um das gewünschte Dokument zu erzeugen, beispielsweise auszudrucken.

Die in F 4 mit einem gestrichelten Rahmen umfassten Schritte können beispielsweise in Form eines sogenannten Software-Pulgins zum Beispiel in ein Kassensystem integriert werden.

In einem optionalen Schritt S32 kann die obige Benutzerkennung von der ersten Vorrichtung erhalten und beispielsweise für ein Kundenbindungsprogramm, Bonusprogramm oder dergleichen verwendet werden.

Zur Veranschaulichung von Ausführungsformen, bei denen personenbezogene Dokumente in Papierform erzeugt werden, wird im Folgenden auf einen Kunden (erster Benutzer) Bezug genommen, der in einem Restaurant eine umsatzsteuergerechte Rechnung wünscht. Die Rechnung soll neben den erforderlichen Angaben des Restaurants, Restaurantbetreibers, Restaurantbesitzers, Restaurantpächters und dergleichen (zweiter Benutzer; im Folgenden zusammenfassend das Restaurant) auch die erforderlichen Angaben des Kunden in aufgedruckter Form aufweisen. Die folgenden Ausführungen gelten entsprechend für alle anderen Geschäfte, Unternehmen etc., bei denen Rechnungen erstellt werden.

Vereinfachend wird im Folgenden davon ausgegangen, dass der Kunde - als erste Vorrichtung - eine tragbare Speichervorrichtung in Form einer Magnetkarte zum Speichern der ihm zugeordneten Daten (dem ersten Benutzer zugeordnete Daten) verwendet. Im Fall von Restaurants sind Kassen üblicherweise mit Magnetkartenleseneinrichtungen ausgestattet und/oder werden in Verbindung mit Magnetkartenlesevorrichtungen betrieben. Die folgenden Ausführungen gelten aber auch für alle anderen Formen von als erste Vorrichtung verwendbaren Vorrichtungen, insbesondere hinsichtlich deren unterschiedlichen Schnittstellen (erste Schnittstelle). So finden zum Beispiel im Bereich der Gastronomie transponderbasierte Systeme und Vorrichtungen zunehmend Verwendung, die beispielsweise eine RIF-Technologie nutzen. In solchen Fällen wäre von einer zweiten Schnittstelle auszugehen, die die entsprechende transponderbasierte Datenübertragung unterstützt. Vorteilhaft wäre es (z.B. für Anwendungen in der Gastronomie), wenn die tragbare Speichervorrichtung des Kunden für unterschiedliche zweite Schnittstellen geeignet ist und zum Beispiel sowohl in Verbindung mit einem Magnetkartenleser als auch zur transponderbasierten Datenübertragung geeignet ist.

Rechnungen sollen gemäß Steuergesetzen betreffende Vorschriften Angaben sowohl über einen als Leistungsempfängers agierenden Benutzer (hier der Kunde), als auch über einen als leistenden Unternehmer oder Unternehmen agierenden Benutzer (hier das Restaurant), enthalten.

Angaben über den ersten Benutzer (Leistungsempfänger, Kunde) können zum Beispiel dessen Namen und Anschrift und optional dessen Umsatzsteuer-Identifikationsnummer oder dergleichen umfassen.

Angaben über den zweiten Benutzer (leistender Unternehmer, Restaurant) können zum Beispiel dessen vollständiger Name und die Adresse auch dessen Steuernummer und/oder dessen Umsatzsteuer-Identifikationsnummer umfassen.

Ferner kann es bei solchen Rechnungen erforderlich sein, Angabe über von dem zweiten Benutzer erbrachte Leistungen (Verkauf von Waren und/oder Erbringen von Dienstleistungen) und damit im Zusammenhang stehende Angaben bereitzustellen. Solche leistungsbezogenen Angaben können zum Beispiel das Ausstellungsdatum der Rechnung, eine Rechnungsnummer, Menge und Art der gelieferten Waren und/oder Umfang und Art der sonstigen Leistung (insbesondere Dienstleistungen), Zeitpunkt, an dem die Leistung erbracht wird (z.B. Tag der Lieferung einer Ware und/oder sonstigen Leistung), Vereinnahmung einer vom ersten Benutzer erbrachten Bezahlung (Entgelt) und/oder für die erbrachte Leistung anwendbare Steuersätze und/oder Steuerbefreiungen.

Um eine solche Rechnung zu erhalten gibt der Kunde seine Magnetkarte der für die Rechnungserstellung zuständigen Person (d.h. nicht notwendiger Weise dem zweiten Benutzer), die die Magnetkarte mit einem Kartenlesegerät des zur Rechnungserstellung verwendeten Kassensystems ausliest. Dabei werden die Daten der Magnetkarte des Kunden gelesen, die auf der Rechnung erscheinen sollen.

Dem Kassensystem stehen der Rechnungsbetrag, gegebenenfalls aufgeschlüsselt nach einzelnen Rechungspositionen, z.B. durch Eingabe des Kellners, zur Verfügung. Wenn zur Rechnungserstellung verwendetes Papier nicht bereits vorab mit umsatzsteuerlichen Angaben des Restaurants bedruckt ist oder solche Angaben nur unvollständig aufweist, greift das Kassensystem auf diesem bereitgestellte Daten (z.B. von einem Speicher des Kassensystems) zu. Ferner stehen dem Kassensystem Informationen über Tag, Monat, Jahr und Uhrzeit zur Verfügung, zum Beispiel durch einen internen Taktgeber oder von einem entfernten System, dass solche Informationen drahtgebunden oder drahtlos bereitstellt ("Funkuhr"). Diese Daten sind dem Restaurant zu geordnete Daten.

Das Kassensystem druckt dann unter Verwendung der Daten des Kunden und seiner Daten eine Rechnung aus, die diesen Daten entsprechende Angaben enthält.

Wenn die erste Vorrichtung neben umsatzsteuerrelevanten Angaben oder anstelle derselben persönliche Angaben des ersten Benutzers aufweist (z.B. Name, Adresse, Telefonnummer, Faxnummer, E-Mail-Adresse, Alter, Geschlecht, Familienstand, Foto etc.), können auf einfache Weise Angebote, Namensschilder, Eintrittskarte und andere Papierdokumente erzeugt werden, die die persönlichen Angaben des ersten Benutzers und Angaben aufweisen, die dem das Papierdokument erstellenden Benutzer zugeordnet sind.

Insbesondere wenn komplexere und/oder umfangreiche persönliche Daten des ersten Benutzers bereitgestellt werden sollen, kann es vorteilhaft sein, diese Daten in einem Speicher (erste Speichereinrichtung) der tragbaren Speichervorrichtung zu speichern, der komplexer ausgeführt ist und/oder - falls vorhanden - von einem Speicher für umsatzsteuerrelevante Daten getrennt ist. Dies kann beispielsweise erreicht werden, indem die persönlichen Daten in einem Speicherchip einer Karte gespeichert sind und gegebenenfalls umsatzsteuerrelevante Daten mit einem Magnetstreifen der Karte gespeichert sind.

So ist beispielsweise möglich, für einen Kunden in einem Geschäft oder auf einer Messe ein persönliches Angebot zu erstellen. Die persönlichen Daten des Kunden werden von dessen tragbarer Speichervorrichtung mit der zur Angebotserstellung verwendeten Vorrichtung auslesen. Die ausgelesenen Daten werden dann zusammen mit Daten des Angebotserstellers (Name, Adresse, Datum, Ort, Angabe von Produkt(en) und/oder Dienstleistung(en) etc.) auf dem Angebot ausgedruckt.

Ferner ist es möglich, für einen Besucher einer Veranstaltung (Kongress, Messe, Konzert) eine persönliche Eintrittskarte und/oder ein persönliches Namensschild zu erstellen. Die persönlichen Daten des Besuchers werden von dessen tragbarer Speichervorrichtung mit der zur Eintrittskarten- und/oder Namensschilderstellung verwendeten Vorrichtung ausgelesen. Die ausgelesenen Daten werden dann zusammen mit Daten des Veranstalters (Name, Adresse, Datum, Ort, Angabe von Produkt(en) und/oder Dienstleistung(en) etc.) auf der Eintrittskarte und/oder dem Namensschild ausgedruckt.

Diese Bespiele veranschaulichen, dass Daten des ersten Benutzers auf einfache Weise, insbesondere ohne manuelle Eingabe der Daten, zur Erstellung von Papierdokumenten bereitgestellt werden. Da es dabei im Allgemeinen nicht vorgesehen ist, Daten des ersten Benutzers zu speichern, sondern nur bei der Erzeugung eines Papierdokuments zu verwenden, werden ferner datenschutzrechtliche Überlegungen vermieden.

Bei den obigen veranschaulichenden Beispielen werden personenbezogene Dokumente in Papierform erzeugt. Bei anderen Ausführungsformen können Dokumente in elektronischer Form erzeugt werden. Dies gilt insbesondere für Dokumente, die persönliche Daten eines ersten Benutzers aufweisen sollen. Ausführungsformen zur Erzeugung von Papierdokumenten und Ausführungsformen zur Erzeugung von Dokumenten in elektronischer Form ist gemeinsam, dass Daten eines ersten Benutzers, die das zu erzeugende Dokument aufweisen soll, mittels einer einfachen tragbaren Speichervorrichtung bereitgestellt werden. Technisch aufwändige und teure Systeme, wie zum Beispiel Computer, Datenbanken und dergleichen, sind ebenso wenig erforderlich, wie solche Daten manuell einzugeben.

Um beispielsweise ein elektronisches Dokument in Form eines elektronischen Textdokuments mit einem für einen Kunden (erster Benutzer) personalisierten Briefkopf eines Unternehmens zu erzeugen, können persönliche Daten des Kunden von dessen tragbaren Speichervorrichtung ausgelesen und mit Briefkopfdaten des Unternehmens kombiniert werden. Das Textdokument kann dann als Vorlage verwendet werden, um beispielsweise Angebot, Briefe, Informationsunterlagen etc. für den Kunden zu erzeugen oder auszudrucken. Entsprechendes gilt für elektronische Dokumente zu Erstellung von für einen Kunden personalisierten Etiketten, Namensschildern, Adresseinträgen (z.B. in einem E-Mail-Adressverzeichnis) und dergleichen.

## Patentansprüche

1. System zur Erzeugung eines personenbezogenen Dokuments, mit:
- einer ersten, einem ersten Benutzer zugeordneten Vorrichtung, die tragbar ist und aufweist
- eine erste Speichereinrichtung zur Speicherung von dem ersten Benutzer zugeordneten Daten, und
- eine erste Schnittstelle zur Bereitstellung von dem ersten Benutzer zugeordneten Daten der ersten Speichereinrichtung;
und
- einer zweiten, einem zweiten Benutzer zugeordneten Vorrichtung, die aufweist
- eine zweite Schnittstelle zum Empfang von dem ersten Benutzer zugeordneten Daten über die erste Schnittstelle,
- eine Einrichtung zur Bereitstellung von dem zweiten Benutzer zugeordneten Daten, und
- eine Einrichtung zur Erzeugung eines Papierdokuments mit Angaben, die die empfangenen, dem ersten Benutzer zugeordneten Daten und die dem zweiten Benutzer zugeordneten Daten wiedergeben.

2. System zur Erzeugung eines personenbezogenen Dokuments, mit:
- einer ersten, einem ersten Benutzer zugeordneten Vorrichtung, die tragbar ist und aufweist
- eine erste Speichereinrichtung zur Speicherung von dem ersten Benutzer zugeordneten Daten, und
- eine erste Schnittstelle zur Bereitstellung von dem ersten Benutzer zugeordneten Daten der ersten Speichereinrichtung;
und
- einer zweiten, einem zweiten Benutzer zugeordneten Vorrichtung, die aufweist
- eine zweite Schnittstelle zum Empfang von dem ersten Benutzer zugeordneten Daten über die erste Schnittstelle,
- eine Einrichtung zur Bereitstellung von dem zweiten Benutzer zugeordneten Daten, und
- eine Einrichtung zur Erzeugung eines elektronischen Dokuments mit Angaben, die die empfangenen, dem ersten Benutzer zugeordneten Daten und die dem zweiten Benutzer zugeordneten Daten wiedergeben.

3. System nach Anspruch 1 oder 2, bei dem
die erste Speichereinrichtung Daten aufweist, die steuerrechtlich relevante Angaben des ersten Benutzers wiedergeben.

4. System nach einem der vorherigen Ansprüche, bei dem
die erste Speichereinrichtung Daten aufweist, die personenbezogenen Angaben des ersten Benutzers wiedergeben.

5. System nach einem der vorherigen Ansprüche, bei dem
die erste Speichereinrichtung wenigstens zwei getrennte Speicher umfasst.

6. System nach Anspruch 5, bei der
- ein erster Speicher der ersten Speichereinrichtung zur Speicherung eines ersten Datentyps vorgesehen ist, und
- ein zweiter Speicher der ersten Speichereinrichtung zur Speicherung eines zweiten Datentyps vorgesehen ist.

7. System nach einem der vorherigen Ansprüche, bei dem
die erste Speichereinrichtung und die erste Schnittstelle wenigstens teilweise baueinheitlich integriert sind.

8. System nach einem der vorherigen Ansprüche, bei dem
- die erste Vorrichtung eine erste Steuereinrichtung umfasst, und
- die erste Steuereinrichtung ausgelegt ist, eine Übertragung von dem ersten Benutzer zugeordneten Daten von der ersten Speichereinrichtung über die erste Schnittstelle zu steuern.

9. System nach Anspruch 8, bei dem
die erste Steuereinrichtung und die erste Speichereinrichtung wenigstens teilweise baueinheitlich integriert sind.

10. System nach einem der vorherigen Ansprüche, bei dem
die Einrichtung zur Bereitstellung der dem zweiten Benutzer zugeordneten Daten wenigstens eine der folgenden Komponenten umfasst:
einen Speicher, eine Dateneingabeschnittstelle, einen Datenbus, ein Dateneingabemedium.

11. System nach einem der vorherigen Ansprüche, bei dem
die zweite Vorrichtung eine zweite Speichereinrichtung zur Speicherung der empfangenen, dem ersten Benutzer zugeordneten Daten umfasst.

12. System nach einem der vorherigen Ansprüche, bei dem
- die zweite Vorrichtung eine zweite Steuereinrichtung umfasst, und
- die zweite Steuereinrichtung ausgelegt ist, über die zweite Schnittstelle Daten der ersten Speichereinrichtung abzurufen.

13. System nach einem der vorherigen Ansprüche, mit
- mit einem Datenspeicher, und
- bei dem die zweite Vorrichtung ausgelegt ist, die empfangenen, dem ersten Benutzer zugeordneten Daten oder auf den empfangenen, dem ersten Benutzer zugeordneten Daten basierenden Daten in dem Datenspeicher zu speichern und/oder zur Speicherung in dem Datenspeicher zu dem Datenspeicher zu übertragen.

14. System nach einem der vorherigen Ansprüche, bei dem
die zweite Vorrichtung eine Schnittstelleneinrichtung umfasst, die zur Datenübertragung von und zu einer externern Vorrichtung oder System und, soweit von Anspruch 13 abhängig, zur Datenübertragung von und zu dem Datenspeicher vorgesehen ist.

15. System nach einem der vorherigen Ansprüche, bei dem
die erste Vorrichtung als Magnetspeicherkarte, Chip-Karte, transponderbasierte Vorrichtung, Smart-Karte, Kreditkarte oder Scheckkarte ausgeführt ist.

16. System nach einem der vorherigen Ansprüche, bei dem
- die zweite Schnittstelle zur Datenübertragung zu einer Magnetkartenleseeinrichtung, einer Chip-Kartenleseeinrichtung, einer transponderbasierten Empfangseinrichtung oder zur funkbasierten Datenübertragung ausgelegt ist, und
- die zweite Schnittstelle eine Magnetkartenleseeinrichtung, eine Chip-Kartenleseeinrichtung, eine transponderbasierte Empfangseinrichtung bzw. eine Einrichtung zur funkbasierten Datenübertragung umfasst.

17. System nach einem der Ansprüche 1 und 3 bis 16, bei dem
die zweite Vorrichtung eine Registrierkasse, ein Kassensystem, eine tragbare Vorrichtung zur Aufnahme von Kundenbestellungen und/oder zu Erstellung von Rechungen, Quittungen und dergleichen oder ein computerbasierte Vorrichtung umfasst, die zur Ausgabe von Papierdokumenten oder zur Übertragung von Daten an eine zentrale Einrichtung zur Ausgabe von Papierdokumenten eingerichtet ist.

18. System nach einem der Ansprüche 1 und 3 bis 17, bei dem
- die erste Vorrichtung eine tragbare Speicherkarte ist, die einem Empfänger einer Leistung als dem ersten Benutzer zugeordnet ist,
- der erste Speicher ein Speicher zur Speicherung von Daten ist, die Angaben über den Leistungsempfänger für eine Rechnung gemäß den Steuergesetze betreffenden Regelungen wiedergeben,
- die zweite Vorrichtung ein Kassensystem ist, das einem leistenden Unternehmer als dem zweiten Benutzer zugeordnet ist,
- die Einrichtung zur Bereitstellung von dem zweiten Benutzer zugeordneten Daten eine Einrichtung ist, um Daten bereitzustellen, die Angaben über den leistenden Unternehmer für eine Rechnung gemäß Steuergesetze betreffenden Regelungen wiedergeben,
- die zweite Schnittstelle eine mit der tragbaren Speicherkarte verbindbare Schnittstelle zum Zugriff auf die Daten der Speicherkarte ist, und
- die Ausgabeeinrichtung ausgelegt ist, eine Rechnung auszudrucken, die mit den Angaben über den Leistungsempfänger und den Angaben über den leistenden Unternehmer versehen ist.

19. System nach einem der Ansprüche 2 bis 15, bei dem
die zweite Vorrichtung eine computerbasierte Vorrichtung umfasst, die ausgelegt ist, die empfangenen, dem ersten Benutzer zugeordneten Daten und die bereitgestellten, dem zweiten Benutzer zugeordneten Daten in einen gemeinsamen Datensatz integriert zu speichern.

20. System nach einem der Ansprüche 2 bis 19, bei dem
- die erste Vorrichtung eine dem ersten Benutzer zugeordnete, tragbare Speicherkarte zur Speicherung von Daten ist, die Angaben wiedergeben, die mit Angaben einer Visitenkarte des Benutzers vergleichbar sind, und
- die zweite Vorrichtung ausgelegt ist, über die zweite Schnittstelle auf die Daten der tragbaren Speicherkarte zuzugreifen und die Daten der tragbaren Speicherkarte in der zweiten Vorrichtung zu speichern.

21. Tragbare Speichervorrichtung zur Verwendung mit dem System nach einem der vorherigen Ansprüche, mit
- einer Speichereinrichtung zur Speicherung von einem Benutzer der tragbaren Speichervorrichtung zugeordneten Daten, und
- einer Schnittstelle zur Bereitstellung von dem Benutzer zugeordneten Daten der Speichereinrichtung.

22. Kassensystem zur Verwendung mit dem System nach einem der vorherigen Ansprüche, mit
- einer Schnittstelle zum Empfang von einem Benutzer einer tragbaren Speichervorrichtung zugeordneten Daten,
- einer Einrichtung zur Bereitstellung von einem Benutzer des Kassensystems zugeordneten Daten, und
- einer Ausgabeeinrichtung zur Ausgabe einer Papierdokuments, insbesondere in Form einer Rechnung, mit Angaben, die die empfangenen, dem Benutzer der tragbaren Speichervorrichtung zugeordneten Daten und die dem Benutzer des Kassensystems zugeordneten Daten wiedergeben.

23. Computerbasierte Vorrichtung zur Verwendung mit dem System nach einem der vorherigen Ansprüche, mit
- einer Schnittstelle zum Empfang von einem Benutzer einer tragbaren Speichervorrichtung zugeordneten Daten,
- einer Einrichtung zur Bereitstellung von einem Benutzer der computerbasierten Vorrichtung zugeordneten Daten, und
- einer Speichereinrichtung zur Speicherung eines elektronischen Dokuments, insbesondere in Form einer elektronischen Visitenkarte oder Adresseintrags, mit Angaben, die die empfangenen, dem Benutzer der tragbaren Speichervorrichtung zugeordneten Daten und die dem Benutzer der computerbasierten Vorrichtung zugeordneten Daten wiedergeben.

24. Verfahren zum Erzeugen eines personenbezogenen Dokuments mit folgenden Schritten:
- Übertragen von einer ersten Vorrichtung, die einem ersten Benutzer zugeordnet ist und tragbar ist, von dem ersten Benutzer zugeordneten Daten zu einer zweiten Vorrichtung, die einem zweiten Benutzer zugeordnet ist und zur Erzeugung des personenbezogenen Dokuments vorgesehen ist,
- Bereitstellen von dem zweiten Benutzer zugeordneten Daten, und
- Erzeugen eines Papierdokuments mit Angaben, die die übertragenen, dem ersten Benutzer zugeordneten Daten und die dem zweiten Benutzer zugeordneten Daten wiedergeben, als das personenbezogene Dokument.

25. Verfahren zum Erzeugen eines personenbezogenen Dokuments mit folgenden Schritten:
- Übertragen von einer ersten Vorrichtung, die einem ersten Benutzer zugeordnet ist und tragbar ist, von dem ersten Benutzer zugeordneten Daten zu einer zweiten Vorrichtung, die einem zweiten Benutzer zugeordnet ist und zur Erzeugung des personenbezogenen Dokuments vorgesehen ist,
- Bereitstellen von dem zweiten Benutzer zugeordneten Daten, und
- Erzeugen eines elektronischen Dokuments mit Angaben, die die übertragenen, dem ersten Benutzer zugeordneten Daten und die dem zweiten Benutzer zugeordneten Daten wiedergeben, als das personenbezogene Dokument.

26. Verfahren nach Anspruch 24 oder 25, bei dem
Daten, die umsatzsteuerrechtlich relevante Angaben des ersten Benutzers wiedergeben, von der ersten Vorrichtung zu der zweiten Vorrichtung übertragen werden.

27. Verfahren nach einem der Ansprüche 24 bis 26, bei dem
Daten, die personenbezogenen Angaben des ersten Benutzers wiedergeben, von der ersten Vorrichtung zu der zweiten Vorrichtung übertragen werden.

28. Verfahren nach einem der Ansprüche 24 bis 27, bei dem
ein dem ersten Benutzer zugeordneter, erster Datentyp und ein dem ersten Benutzer zugeordneter, zweiter Datentyp getrennt gespeichert werden.

29. Verfahren nach einem der Ansprüche 24 bis 28, bei dem
die Daten wenigstens teilweise unter Steuerung der ersten Vorrichtung von der ersten Vorrichtung zu der zweiten Vorrichtung übertragen werden.

30. Verfahren nach einem der Ansprüche 24 bis 29, bei dem
die übertragenen, dem ersten Benutzer zugeordneten Daten wenigstens teilweise in der zweiten Vorrichtung und/oder so gespeichert werden, dass die zweite Vorrichtung auf die gespeicherten Daten zugreifen kann.

31. Verfahren nach einem der Ansprüche 24 bis 30, bei dem
die Daten wenigstens teilweise unter Steuerung der zweiten Vorrichtung von der ersten Vorrichtung zu der zweiten Vorrichtung übertragen werden.

32. Verfahren nach einem der Ansprüche 24 bis 31, bei dem
als das personenbezogene Dokument wenigstens eines der folgenden Dokumente jeweils mit den die die übertragenen, dem ersten Benutzer zugeordneten Daten und die dem zweiten Benutzer zugeordneten Daten wiedergebenden Angaben erzeugt wird:
eine Rechung, eine Quittung, ein Beleg, eine Eintrittskarte, eine Namensschild, ein Brief, eine E-Mail, eine schriftliche Bestellung, ein schriftliches Angebot, hier bitte weitere Möglichkeiten ergänzen

33. Computerprogrammprodukt mit Programmkode zur Durchführung des Verfahren nach einem der Ansprüche 24 bis 32.

34. Computerprogrammprodukt nach Anspruch 33, gespeichert auf einem computerlesbaren Speichermedium oder in einer computerlesbaren Speichervorrichtung.
